(19) Europäisches Patentamt
European Patent Office
Office européen des brevets

(11) Publication number: **0 496 405 A1**

# (12) EUROPEAN PATENT APPLICATION

(21) Application number: **92101098.9**

(51) Int. Cl.5: **C08F 212/14**, C08F 8/12

(22) Date of filing: **23.01.92**

(30) Priority: **25.01.91 JP 7900/91**
**30.09.91 JP 252179/91**

(43) Date of publication of application:
**29.07.92 Bulletin 92/31**

(84) Designated Contracting States:
**BE CH DE DK FR GB IT LI**

(71) Applicant: **MITSUBISHI KASEI CORPORATION**
**5-2, Marunouchi 2-chome Chiyoda-ku**
**Tokyo 100(JP)**

(72) Inventor: **Morita, Takamitsu**
**3, Sakuradai, Midori-ku**
**Yokohama-shi, Kanagawa-ken(JP)**
Inventor: **Watanabe, Junya**
**4-18-24, Soshigaya**
**Setagaya-ku, Tokyo(JP)**
Inventor: **Teshima, Hiromi**
**1453-21, Shimotsuruma, Yamato-shi**
**Kanagawa-ken(JP)**

(74) Representative: **Wächtershäuser, Günter, Dr.**
**Tal 29**
**W-8000 München 2(DE)**

## (54) Porous resin and process for its production.

(57) A spherical crosslinked porous resin comprising repeating units of the formulas (A), (B) and (C) within ranges of from 0.5 to 96% by weight, from 4 to 80% by weight and from 0 to 50% by weight, respectively:

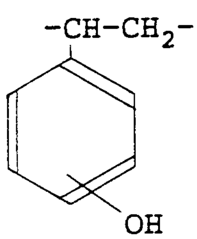

(A)

wherein the OH group is at the m- or p-position;

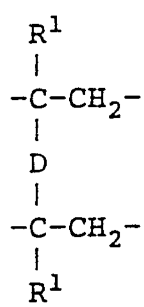

(B)

EP 0 496 405 A1

wherein $R^1$ is a hydrogen atom or a $C_{1-3}$ alkyl group, and D is an arylene group which may have a $C_{1-3}$ alkyl group, $-COO(CH_2)_nOCO-$ or $-CO(CH_2-CH_2-CHR^2-CH_2)OCO-$, wherein n is an integer of from 2 to 4, and $R^2$ is a carboxyl ester group;

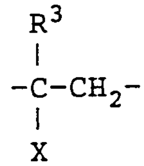

(C)

wherein X is an aryl group which may have a substituent, a carboxyl group or a carboxy ester group, and $R^3$ is a hydrogen atom or a $C_{1-3}$ alkyl group.

The present invention relates to a porous resin and a process for its production. More particularly, the present invention relates to a spherical porous resin characterized in that it has a novel crosslinked porous structure.

A porous adsorbent made of a three dimensionally crosslinked copolymer of an aromatic addition polymerizable monomer such as styrene with a crosslinkable monomer (hereinafter referred to simply as a porous adsorbent) is widely used for recovery by adsorption of a useful substance contained in water or in an organic solvent-water mixture, or for selective removable of impurities, by virtue of its hydrophobic nature.

The application fields of such a porous adsorbent include recovery of substances useful as pharmaceuticals or foods from fermentation broth and selective adsorption and removal of impurity components from mixtures of e.g. pharmaceuticals or foods.

Such a process for recovery of useful substances or for separation for purification, usually includes two types of steps i.e. adsorption of substances to be adsorbed, from a solvent onto the porous adsorbent and desorption of the adsorbed substances from the porous adsorbent.

To conduct such a process efficiently, it is required to improve the amount of adsorption of the substances to be adsorbed, on the porous adsorbent and thus increase the recovery rate of the substances by a single operation. However, adsorption of the substances to be adsorbed, on the porous adsorbent varies depending upon the porosity and the nature such as hydrophilicity of the adsorbent.

The porosity of the adsorbent is provided and influenced by the action of a solvent which is used for copolymerization of an aromatic addition polymerizable monomer with a crosslinkable monomer and which has no compatibility with the formed aromatic addition polymer, or by the action of a mixture of such solvents.

Such a porous adsorbent made of an aromatic crosslinked copolymer lacks in the affinity to an aqueous solution containing substances to be adsorbed in the actual process for separation for purification, due to its hydrophobic nature. Further, a floating phenomenon frequently occurs in an aqueous solution to be treated, due to drying of the porous adsorbent.

On the other hand, as a hydrophilic aromatic crosslinked copolymer, crosslinked polyhydroxystyrene is known which is prepared in such a manner that p-acetoxystyrene and divinylbenzene are solution-polymerized to obtain a crosslinked copolymer, which is then pulverized and classified, followed by hydrolysis of the copolymer particles thereby obtained (N. Kawabata et al, Ind. Eng. Chem. Res, 1990, 29, 1889-1893). However, this is a pulverized product. Therefore, the shape is not spherical and uniform, and it is not suitable for use as an adsorbent. Since p-acetoxystyrene is water-soluble, it is hardly conceivable to produce the polymer by suspension polymerization.

An object of the present invention is to further improve a conventional crosslinked resin, to improve its affinity to an aqueous solution containing substances to be adsorbed, to provide a porous adsorbent which is capable of efficiently removing and recovering useful substances and to provide a useful process for producing such a porous adsorbent.

Another object of the present invention is to provide a porous adsorbent which can makes the dispersibility of substances to be adsorbed improve in pores thereof and having the operation efficiency, particularly the performance for desorbing the adsorbed substances, improved so that the removal and recovery of useful substances can be efficiently conducted, and to provide a useful process for producing such a porous adsorbent.

The present inventors have conducted extensive studies with an aim to improve the above mentioned adsorbent having a high affinity to an aqueous solution, and as a result, have found it possible to obtain the desired resin by introducing certain functional groups into the resin and to produce such a resin by a certain specific process. The present invention has been accomplished on the basis of this discovery.

Thus, the present invention provides a spherical crosslinked porous resin comprising repeating units of the formulas (A), (B) and (C) within ranges of from 0.5 to 96% by weight, from 4 to 80% by weight and from 0 to 50% by weight, respectively:

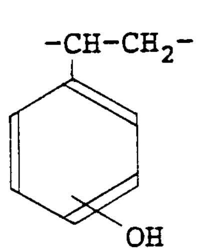

(A)

wherein the OH group is at the m- or p-position;

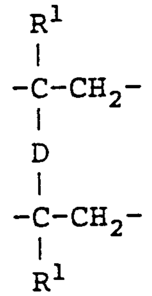

(B)

wherein $R^1$ is a hydrogen atom or a $C_{1-3}$ alkyl group, and D is an arylene group which may have a $C_{1-3}$ alkyl group, $-COO\leftarrow CH_2\rightarrow_n OCO-$ or $-COO\leftarrow CH_2-CH_2-CHR^2-CH_2\rightarrow OCO-$, wherein n is an integer of from 2 to 4, and $R^2$ is a carboxyl ester group;

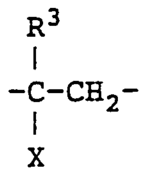

(C)

wherein X is an aryl group which may have a substituent, a carboxyl group or a carboxy ester group, and $R^3$ is a hydrogen atom or a $C_{1-3}$ alkyl group.

The present invention also provides a spherical crosslinked porous resin comprising repeating units of the formulas (A), (B) and (C) in the specific range as mentioned above and having a specific surface area of at least 800 $m^2/g$.

The present invention also provides a process for producing a spherical crosslinked porous resin, which comprises suspension-copolymerizing a mixture comprising (x) a m- or p-alkoxystyrene, (y) a polyvinyl compound and (z) a monovinyl compound other than an alkoxystyrene within ranges of from 0.5 to 96% by weight, from 4 to 80% by weight and from 0 to 50% by weight, respectively, based on the total amount of monomers, in the presence of a pore-forming agent and a radical polymerization initiator, to obtain a spherical crosslinked copolymer, and hydrolyzing the copolymer in an acidic or basic atmosphere to convert units derived from the alkoxystyrene (x) to the structure of the formula (A) as defined above.

Further, the present invention provides a process for producing a spherical crosslinked porous resin, which comprises reacting the crosslinked copolymer having a structure of the formula (A) thus prepared, with a Lewis acid catalyst in the presence of an inert solvent.

Now, the present invention will be described in detail with reference to the preferred embodiments.

The structure of the formula (A) contained in the spherical crosslinked porous resin of the present invention, is introduced usually by an aromatic vinyl compound as its precursor. As such a precursor, an alkoxystyrene such as ethoxystyrene, methoxystyrene, propoxystyrene, acetoxystyrene or t-butoxystyrene, particularly the styrene having the substituent at the m- or p-position, may be employed.

The alkoxystyrenes used here are compounds which can readily be converted to the structure of the formula (A) under a hydrolytic reaction condition under an acidic or basic condition.

Compounds having structural units of the formula (A) i.e. hydroxystyrenes have been known to have high reactivity and as such, they are not suitable for the copolymerization reaction with the polyvinyl compound of the present invention. Therefore, as in the process of the present invention, it is advisable to employ a method wherein an alkoxystyrene represented by (x) is introduced, and then hydrolyzed.

In the structure of the formula (B), the $C_{1-3}$ alkyl group may be a methyl group or an ethyl group, and the arylene group may be a phenylene group such as a 1,4-phenylene group, or a naphthylene group such as a 1,4-naphthylene group.

The structural unit of the formula (B) is introduced by a polyvinyl compound represented by (y) in the process of the present invention, specifically by an aromatic polyvinyl compound. As such a polyvinyl compound, divinylbenzene, divinyltoluene, divinylxylene or divinylnaphthalene may, for example, be employed. Further, an aliphatic polyvinyl compound such as ethylene glycol dimethacrylate or trimethylolpropane trimethacrylate may also be employed. Among them, an aromatic polyvinyl compound with or without a $C_{1-3}$ alkyl group substituted on the benzene ring, such as divinyl benzene or divinyl toluene, is preferred.

The structural unit of the formula (C) is introduced by a monovinyl compound other than an alkoxystyrene. As an aromatic monovinyl compound, styrene, vinyltoluene, vinylnaphthalene or ethylvinylbenzene may, for example, be mentioned.

Other than the above aromatic vinyl compound, an aliphatic monovinyl compound such as methyl methacrylate, acrylonitrile, 2-hydroxyethyl methacrylate, methacrylic acid or ethyl acrylate, may also be employed.

For the production of a spherical crosslinked porous resin in accordance with the present invention, the mixing ratio of the alkoxystyrene, the polyvinyl compound and the monovinyl compound other than alkoxystyrene, may optionally be changed depending upon the desired properties of the porous resin. However, the amount of the alkoxystyrene is from 0.5 to 96% by weight, based on the total vinyl compounds. Here, if the amount is less than 0.5% by weight, the effects of the present invention tend to be hardly obtained. On the other hand, if it exceeds 96% by weight, the efficiency in the crosslinking reaction tends to be poor, and the resulting resin tends to be poor in the practical usefulness. The amount of the polyvinyl compound as a crosslinking agent is usually selected within a range of from 4 to 80% by weight, preferably from 15 to 60% by weight, based on the total vinyl compounds. If the amount of this polyvinyl compound is too small, when treatment with a Lewis acid catalyst is conducted after the crosslinking reaction in the process of the present invention, cracking or reduction of the strength of the resin beads will occur, such being undesirable. On the other hand, if the amount is too much, reaction conditions for the Lewis acid catalyst treatment will be strict, such being undesirable from the industrial viewpoint.

The amount of the monovinyl compound other than alkoxystyrene may be selected within a range from 0 to 50% by weight, based on the total vinyl compounds.

These monovinyl compounds and the polyvinyl compound are suspension-polymerized in accordance with a conventional method. As a polymerization initiator for this suspension polymerization, dibenzoyl peroxide, lauroyl peroxide, t-butyl hydroperoxide or azobisisobutyronitrile, may, for example, be used usually in an amount of from 0.5 to 5% by weight, based on the total monomers. The polymerization temperature varies depending upon the type and the concentration of the polymerization initiator, but it is usually selected within a range of from 40 to 90°C.

The polymer obtained by the suspension polymerization in accordance with a conventional method is characterized in that it has a porous structure. Preferably, it has a pore volume of at least 0.1 mℓ/g, preferably at least 0.2 mℓ/g and a specific surface area of at least 100 $m^2$/g.

For sufficient diffusion of substances to be adsorbed into the resin, the porous resin preferably has an average pore radius of at least 10 nm. If the average pore radius is small, the effects for desorption of the present invention may not be expected. A porous copolymer having an average pore radius of at least 10 nm may be prepared by a known method, for example, as disclosed in "Chelate Resins and Ion Exchange Resins", edited by Hojo et al, published by Kodansha, p. 135-141. Namely, in order to impart such a porous structure, it is preferred to use as a pore-forming agent, at the time of the above suspension polymerization reaction, an aromatic compound such as toluene or benzene, an ester compound such as ethyl acetate or butyl acetate, an alcohol such as isoamyl alcohol or methylisobutylcarbinol, a saturated hydrocarbon such as n-heptane or isooctane, a halogen-type solvent such as dichloroethane or trichloroethylene, a plasticiser such as dioctyl phthalate or dibutyl adipate, or a linear polymer such as polystyrene or polyvinyl acetate having a weight average molecular weight of from 5,000 to 500,000, preferably from 10,000 to 100,000.

With respect to the amount of such a pore-forming agent, when an organic solvent or plasticizer other than the polymer is used among them, the amount is usually from 50 to 250% by weight, based on the total monomers, and when a linear polymer such as polystyrene is used, the amount is from 1 to 20% by weight, based on the total monomers.

The copolymer thus obtained is, after removal of the pore-forming agent, etc. used for the suspension polymerization reaction, subjected to hydrolytic treatment in an acidic or basic aqueous solution, whereby alkoxy groups will be converted to hydroxyl groups. The removal of the pore-forming agent from the crosslinked copolymer may be conducted by putting the crosslinked copolymer in water, followed by azeotropic distillation, or by washing the copolymer with a water-soluble organic solvent such as acetone or methanol, followed by washing the copolymer with water.

The acidic aqueous solution may be any inorganic acid solution such as hydrochloric acid, sulfuric acid and nitric acid.

The hydrolytic reaction can proceed in at least 1 mol/ℓ, preferably in at least 2 mol/ℓ of the acidic aqueous solution, at a temperature of at least 50°C.

The basic aqueous solution may be various alkaline aqueous solution such as sodium hydroxide, potassium hydroxide and calcium hidroxide. The hydrolytic reaction can proceed in at least 1 mol/ℓ of the concentration of the basic aqueous solution at a temperature of at least 40 °C.

A spherical porous crosslinked copolymer thus obtained may be used by itself as a synthetic adsorbent. Otherwise, it may be sulfonated with a sulfonation reagent such as sulfuric acid, fuming sulfuric acid or chlorosulfonic acid, or chloromethylated with a chloroalkylation agent such as chloromethylmethyl ether in the presence of a catalyst, followed by amination by reacting a tertiary amine such as a trialkyl amine, by a conventional method, to obtain an ion exchange resin or a chelate resin.

The specific surface area of the spherical porous crosslinked copolymer thus obtained is less than 800 $m^2/g$. The copolymer may be treated with a Lewis acid catalyst as described below to enlarge the specific surface area to a level of higher than 800 $m^2/g$.

As the Lewis acid catalyst in the present invention, an aprotic catalyst active for a Friedel-Craft reaction composed of a metal halide such as aluminum chloride, ferric chloride, boron trifluoride, zinc chloride, titanium tetrachloride, stannic chloride or aluminum bromide, is useful.

The amount of such a Lewis acid catalyst varies depending upon the desired porosity imparted to the resin and the activity of the catalyst to be used. However, it is usually within a range of from 0.05 to 1.0 g per g of the crosslinked copolymer. When the crosslinked copolymer is treated with a Lewis acid catalyst in accordance with the present invention, it is usually preferred to conduct the treatment in the presence of an organic solvent inert to the reaction, which is capable of suitably swelling the crosslinked copolymer. As such a solvent, nitromethane, nitrobenzene, dichloroethane or o-dichlorobenzene may, for example, be mentioned. The amount of such a solvent may be at any level so long as it is sufficient for adequately swelling the crosslinked copolymer and to conduct the reaction. It is usually within a range of from 1 to 10 mℓ per g of the crosslinked copolymer.

The treatment of the crosslinked copolymer with the Lewis acid catalyst is conducted usually at a temperature of from 0 to 80 °C for from 1 to 20 hours. After the treatment with the Lewis acid catalyst, water, an aqueous hydrochloric acid solution or an aqueous alkaline solution may be added to this reaction system to deactivate the Lewis acid as a Friedel-Craft catalyst, and the hydrolyzate of the Lewis acid catalyst is extracted to the aqueous layer side to terminate the reaction.

The reason why the crosslinked aromatic copolymer is made porous by the treatment with the Lewis acid catalyst, is not clearly understood. However, it is believed that the crosslinked aromatic copolymer is treated in the state swelled by the solvent for swelling, with the Lewis acid catalyst, whereby cleavage of the crosslinkage and re-alkylation take place in the swelled state to form a porous structure.

The porous resin of the present invention may also be produced by directly reacting the copolymer after the suspension polymerization, with the Lewis acid catalyst. Namely, by the reaction with the Lewis acid catalyst, hydrochloric acid will be formed as a by-product in the reaction system. By this hydrochloric acid, a hydrolytic reaction takes place during the catalytic reaction or after the reaction, whereby alkoxy groups of the alkoxystyrene units will be converted to hydroxyl groups. Therefore, the hydrolytic treatment prior to the reaction with the Lewis acid catalyst may not necessarily be required.

The porous copolymer thus obtained can be used as a synthetic adsorbent. Otherwise, it may be formed into an ion exchange resin or chelate resin by sulfonation, or chloromethylation, followed by amination, in accordance with a conventional method.

When the porous copolymer obtained by the process of the present invention, is used as an adsorbent, a suitable solvent will be selected for use for desorbing the adsorbed substance from the adsorbent. Usually, the solvent is selected depending upon the molecular weight, the chemical structure, the chemical stability, etc. of the adsorbed substance. From the operational viewpoint, it is common to select a solvent so that it promotes desorption of the adsorbed substance more strongly than the solvent used for the step for adsorbing the substance. As such a solvent, an alcohol such as methyl alcohol, ethyl alcohol, propyl alcohol, butyl alcohol or amyl alcohol, a ketone such as acetone or methyl isobutyl ketone, or an organic solvent such as acetonitrile, may be employed.

Further, various buffer solutions, acidic solutions or alkaline solutions, which act on ionically dissociable groups of the adsorbed substance. For example, an acetic acid buffer solution, a phosphoric acid buffer solution may be mentioned. Or, a hydrochloric acid solution, a sulfuric acid solution, a sodium hydoxide solution or an aqueous ammonium solution, may be mentioned. The above desorbing agents may be used alone or in combination as a mixture, or may be used sequentially.

Now, the present invention be described in further detail with reference to Examples. However, it should be understood that the present invention is by no means restricted by such specific Examples.

In the Examples, the specific surface area was measured in accordance with a nitrogen absorption method.

EXAMPLE 1

70 parts by weight of divinylbenzene (purity: 80%, the rest being ethylvinylbenzene), 30 parts by weight of p-tert-butoxystyrene (manufactured by Hokko Kagaku K.K.) and 100 parts by weight of toluene were mixed, and 1.0 part by weight of dibenzoyl peroxide was further mixed thereto. The mixture was dropwise added to a suspension medium containing a dispersant to form liquid drops under stirring. Heating was conducted to raise the bath temperature to 80 °C, and the reaction system was maintained at 80 °C for 10 hours to polymerize liquid drops.

Copolymer beads thereby obtained, were washed with water to remove the dispersant attached to the beads.

The copolymer beads were again suspended in water, and suspension was heated under stirring and maintained at 95 °C for 5 hours to remove toluene contained in the beads.

The yield of the copolymer beads thus obtained was 91%, based on the weight of the starting material monomers.

100 parts by weight of the copolymer beads obtained, was suspended in 400 parts by weight of a 20% hydrochloric acid aqueous solution, and the suspension was heated to 80 °C and maintained at that temperature for four hours.

The resin thereby obtained, was subjected to column washing with water to obtain the desired resin. From the weight reduction as calculated as dry resin, it was confirmed that butyl groups corresponding to 30 parts by weight were stoichiometrically eliminated. This resin is designated as Sample A.

EXAMPLE 2

The reaction was conducted in the same manner as in Example 1 except that 150 parts by weight of toluene was used instead of 100 parts by weight of toluene.

The yield of the copolymer beads thereby obtained was 91% based on the weight of starting material monomers. The obtained resin is designated as Sample B.

EXAMPLE 3

The reaction was conducted in the same manner as in Example 2 except that 150 parts by weight of isooctane was used instead of 150 parts by weight of toluene.

The yield of the copolymer beads thereby obtained was 91% based on the weight of starting material monomers. The obtained resin is designated as Sample C.

EXAMPLE 4

20 parts by weight of Sample A (dry product) obtained in Example 1 was introduced into a four necked flask equipped with a stirrer, and the interior of the flask was flashed with nitrogen, and 100 parts by weight of dichloroethane was added thereto. Stirring was continued at room temperature to sufficiently swell Sample A with the solvent. One hour later, 2 parts by weight of ferric chloride was quickly added thereto. After confirming that ferric chloride was uniformly dispersed, the temperature of the reactor was adjusted to 80 °C, and stirring was continued for 6 hours. Then, the reactor was cooled to room temperature.

After completion of the reaction, 100 parts by weight of water was added, and the mixture was stirred at room temperature for 4 hours and then subjected to filtration. The crosslinked copolymer was transferred to a column and washed sequentially with 500 parts by weight of acetone, 500 parts by weight of methanol and 500 parts by weight of water, to obtain a crosslinked copolymer. This resin is designated as Sample F. The water content of this Sample F was 49.8%, and it had a specific surface area of 958 $m^2/g$ and a pore volume of 0.99 mℓ/g.

EXAMPLE 5

In Example 4, hydrolysis after polymerization was not conducted, and the resin after polymerization was heated directly in the presence of ferric chloride. Otherwise, the treatment was conducted in the same manner as in Example 4 to obtain Sample G. The water content of this Sample G was 53.0%, and it had a specific surface area of 894 $m^2/g$ and a pore volume of 0.85 mℓ/g.

COMPARATIVE EXAMPLE 1

70 parts by weight of divinylbenzene (purity: 80%), 30 parts by weight of styrene and 100 parts by weight of toluene were mixed, and 1.0 part by weight of dibenzoyl peroxide was mixed thereto. The mixture was dropwise added to a suspension medium containing a dispersant to form liquid drops under stirring. Heating was conducted to raise the bath temperature to 80°C, and the system was maintained at 80°C for 10 hours to polymerize liquid drops. The copolymer beads thereby obtained was washed with water to remove the dispersant attached to the beads.

The copolymer beads were again suspended in water, and the suspension was heated under stirring and maintained at 95°C for 5 hours to remove toluene contained in the beads.

The yield of the copolymer beads thereby obtained was 91% based on the weight of starting monomers. The obtained resin is designated as Sample D.

COMPARATIVE EXAMPLE 2

70 parts by weight of divinylbenzene (purity: 80%), 30 parts by weight of p-tert-butoxystyrene (manufactured by Hokko Kagaku K.K.) and 100 parts by weight of toluene were mixed, and 1.0 part by weight of dibenzoyl peroxide was mixed thereto. The mixture was dropwise added to a suspension medium containing a dispersant to form liquid drops under stirring. Heating was conducted to raise the bath temperature to 80°C, and the system was maintained at 80°C for 10 hours to polymerize liquid drops.

The copolymer beads thereby obtained, were washed with water to remove the dispersant attached to the beads.

The copolymer beads were again suspended in water, and the suspension was heated under stirring and maintained at 95°C for 5 hours to remove toluene contained in the beads.

The yield of the copolymer beads thus obtained was 91% based on the weight of starting material monomers. A non-hydrolyzed resin thus obtained is designated as Sample E.

TEST EXAMPLE 1

Evaluation of adsorption capacities of resins

With respect to Samples A, B, C, D, E, F and G obtained in the above Examples, the amounts of adsorption of a standard substance were measured.

Test for adsorption of cephalosporin C

An aqueous solution containing cephalosporin C at a concentration of from 500 to 10,000 ppm (the pH was adjusted to 2.5 by hydrochloric acid) was added to an Erlenmeyer flask containing one of the Samples and permitted to penetrate at 25°C for a full day. Then, the cephalosporin C concentration in the outer liquid was quantitatively analyzed by ultraviolet ray absorption.

From an equilibrium adsorption isotherm thus obtained, the amount of equilibrium absorption at the point where the outer liquid concentration became 2,000 ppm, was obtained. The results are summarized in Table 1.

Evaluation of the hydrophilicity of the resins

Samples A, B, C, D, E, F and G thus obtained, were maintained under 0.1 torr at 50°C for 6 hours for drying.

2.0 g of each of the dried Samples was put in a 25 mℓ measuring cylinder.

Then, to each measuring cylinder, 10 mℓ of deionized water or an aqueous sodium hydroxide solution of 0.1 mol/ℓ was added, whereupon the sedimentaion time of each resin to the bottom of the measuring cylinder was recorded. The results are summarized in Table 1.

As described in the foregoing, the present invention can effectively be utilized in various industrial fields where diffusion of the substance to be adsorbed into a porous adsorbent is to be improved, a substance is to be quickly adsorbed and the adsorbed substance is to be desorbed in short period of time, i.e. in the fields for purifying e.g. pharmaceuticals, foods, etc.

Table 1

| Sample No. | Pore volume ($m\ell$) | Specific surface area ($m^2/g$) | Amount of adsorption of cephalosporin | Sedimentation time (hrs) | | Average pore radius (nm) | Water content (%) |
|---|---|---|---|---|---|---|---|
| | | | | Deionized water | NaOH | | |
| A | 0.8 | 674 | 53 | 6 | 1 | 25 | 45.5 |
| B | 1.2 | 638 | 40 | 5 | 1 | - | - |
| C | 2.8 | 370 | 40 | 5 | 1 | - | - |
| D | 0.9 | 590 | 48 | Not sedimented | Not sedimented | - | - |
| E | 0.6 | 527 | 41 | Not sedimented | Not sedimented | - | 41.1 |
| F | 0.99 | 958 | 82.0 | 5 | 1 | - | - |
| G | 0.85 | 894 | 77.0 | 5 | 1 | - | - |

## Claims

1. A spherical crosslinked porous resin comprising repeating units of the formulas (A), (B) and (C) within ranges of from 0.5 to 96% by weight, from 4 to 80% by weight and from 0 to 50% by weight, respectively:

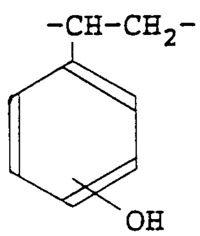

(A)

wherein the OH group is at the m- or p-position;

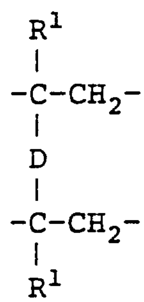

(B)

wherein $R^1$ is a hydrogen atom or a $C_{1-3}$ alkyl group, and D is an arylene group which may have a $C_{1-3}$ alkyl group, $-COO{\leftarrow}CH_2{\rightarrow}_nOCO-$ or $-COO{\leftarrow}CH_2-CH_2-CHR^2-CH_2{\rightarrow}OCO-$, wherein n is an integer of from 2 to 4, and $R^2$ is a carboxyl ester group;

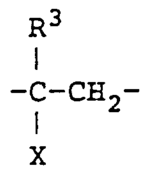

(C)

wherein X is an aryl group which may have a substituent, a carboxyl group or a carboxy ester group, and $R^3$ is a hydrogen atom or a $C_{1-3}$ alkyl group.

2. A process for producing a spherical crosslinked porous resin, which comprises suspension-copolymerizing a mixture comprising (x) a m- or p-alkoxystyrene, (y) a polyvinyl compound and (z) a monovinyl compound other than an alkoxystyrene within ranges of from 0.5 to 96% by weight, from 4 to 80% by weight and from 0 to 50% by weight, respectively, based on the total amount of monomers, in the presence of a pore-forming agent and a radical polymerization initiator, to obtain a spherical crosslinked copolymer, and hydrolyzing the copolymer in an acidic or basic atmosphere to convert units derived from the alkoxystyrene (x) to the structure of the formula (A) as defined in Claim 1.

3. The spherical porous resin according to Claim 1, which has a specific surface area of at least 800 $m^2/g$.

4. The process according to Claim 2, wherein the porous resin obtained is reacted with a Lewis acid catalyst in the presence of an inert solvent.

5. The process according to Claim 2, wherein the compound (x) is a compound selected from m- or p-ethoxystyrene, m- or p-methoxystyrene, m- or p-propoxystyrene, m- or p-acetoxystyrene, and m- or p-butoxystyrene; the compound (y) is a compound selected from divinylbenzene divinyltoluene, divinylxylene, divinylnaphthalene, ethylene glycol dimthacrylate, and trimethylolpropane trimethacrylate; and the compound (z) is a compound selected from styrene, vinyltoluene, vinylnaphthalene, and ethylvinylbenzene.

6. An ion exchange resin having sulfonic acid groups or amino groups introduced to the porous resin of Claim 1.

7. An ion exchange resin having sulfonic acid groups or amino groups introduced to the porous resin of Claim 4.

8. A process for producing a spherical porous resin, which comprises suspension-copolymerizing a mixture comprising (x) a m- or p-alkoxystyrene, (y) a polyvinyl compound and (z) a monovinyl compound other than an alkoxystyrene within ranges of from 0.5 to 96% by weight, from 4 to 80% by weight and from 0 to 50% by weight, based on the total monomers, in the presence of a pore-forming agent and a radical polymerization initiator, to obtain a spherical crosslinked copolymer, and reacting a Lewis acid catalyst to the crosslinked copolymer in the presence of an inert solvent.

European Patent Office

# EUROPEAN SEARCH REPORT

Application Number

EP 92 10 1098

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 775 730 (BALARAM B.G. GUPTA)<br>* column 3, line 8 - column 3, line 19; claim 1 *<br>* column 4, line 3 - column 4, line 20 *<br>----- | 1,2,5-8 | C08F212/14<br>C08F8/12 |
| | | | **TECHNICAL FIELDS SEARCHED (Int. Cl.5 )** |
| | | | C08F |

The present search report has been drawn up for all claims

| Place of search | Date of completion of the search | Examiner |
|---|---|---|
| THE HAGUE | 08 MAY 1992 | CAUWENBERG C.L. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)